# EUROPEAN PATENT APPLICATION

(11) **EP 4 636 132 A1**
(43) Date of publication of application: **22.10.2025**
(21) Application number: 24170213.3
(22) Date of filing: 15.04.2024
(51) Int. Cl.: C25B 1/04, C25B 15/02, H02J 15/00

(54) **A METHOD FOR MONITORING A CONDITION OF AN ELECTROLYZER, A COMPUTER PROGRAM, A COMPUTER-READABLE STORAGE MEDIUM, A CONTROLLER, A CONVERTER, AN ELECTROLYSIS SYSTEM AND AN ELECTRICAL POWER SYSTEM**

(71) Applicant: Siemens Energy Global GmbH & Co. KG, 81739 München (DE)
(72) Inventor: Craciun, Bogdan, 91052 Erlangen (DE); Langenberg, Nils, 90461 Nürnberg (DE); Bartmann, Andreas, 91056 Erlangen (DE)

(57) **Abstract**

The invention relates to a method for monitoring a condition of an electrolyzer (2) of an electrolysis system (1) comprising the electrolyzer (2) and a converter (3) which converts an electrical power output from an electrical energy source (4) into an electrical energy input for the electrolyzer (2) and provides the electrical power input to the electrolyzer (2), wherein the electrolyzer (2)converts the electrical power input into an energy carrier. To determine the condition of the electrolyzer (2), converter log data (7) of the converter (3) is used. The converter log data (7) refer to a periodic time stamp and/or to an identical operating point and/or to an identical transition from a first operating point to a second operating point of the electrolysis system (1) for identifying a trend upon which a wear and/or an abrasion of the electrolyzer (2) or of a component of the electrolyzer (2) is determined.

## Description

### Technical Field

The invention relates to a method for monitoring a condition of an electrolyzer, a computer program, a computer-readable storage medium, a controller, a converter, an electrolysis system and an electrical power system comprising thereof.

### Technological Background

Condition monitoring systems used for electrolysis systems are designed to ensure safe and reliable operation over long periods of time. The condition monitoring system is used when the operator needs to anticipate a malfunction of the electrolysis system or at least have an eye on a development trend. For this purpose, the condition monitoring systems are connected to the electrolysis system and used to monitor the supply of electrical power as well as electrolyzer stacks of the electrolysis systems. Today's electrolyzer systems are starting to gain traction due to recent political shifts towards decarbonization. To monitor large electrolysis system, the necessary tools (e.g. a supervisory control and data acquisition and monitoring systems(SCADA)system) must be in place in order to reduce maintenance costs and availability of those electrolysis systems. In addition, a supplier of electrical power must provide the necessary capability to automatically monitor the electrolysis systems and/or optimize maintenance cycles of the electrolyzer of the electrolysis systems.

To this end, the necessary data acquisition and transmission infrastructure must be improved in order to increase efficiency and availability of a growing number of electrolysis systems.

### Summary of the invention

It is therefore an object of the present invention to provide an improved method for monitoring a condition of an electrolysis system.

A solution is provided by the subject matter according to the independent claims. Advantageous additional embodiments of the invention are described by the dependent claims, the following description and the Figures.

The invention relates to a method for monitoring a condition of an electrolyzer of an electrolysis system comprising the electrolyzer and a converter which converts an electrical power output from an electrical energy source into an electrical energy input for the electrolyzer and provides the electrical power input to the electrolyzer, wherein the electrolyzer converts the electrical power input into an energy carrier.

According to the invention, converter log data of the converter is used to determine the condition.

In other words, the condition may comprise a wear and/or an abrasion of a component of the electrolysis system, particularly of the converter and/or of the electrolyzer, which may be determined based on at least the converter log data from the converter. A component of the electrolyzer may be a stack which may be a smallest unit of the electrolyzer which is adapted to convert the electrical energy input into the energy carrier by means of an electrolysis process. The energy carrier may be hydrogen, for instance. The converter log data may comprise electrical and/or temperature measurement data of the electrical power output received from the electrical energy source and/or of the electrical power input provided to the electrolyzer by the converter. The converter log data may be provided by a converter controller and stored in a buffer data storage of the converter. The converter log data may be retrieved from the buffer data storage of the converter, particularly of the converter controller, for determining and/or monitoring a condition of a component of the electrolyzer, such as a stack. As the converter data are sampled at a higher sampling rate than sensor data from other components of the electrolysis system, the converter log data have got a higher density of measurement data which allows a better determining of the condition of the converter and/or of the electrolyzer.

The electrical power input may be a direct current, whereas the electrical power output may be an alternating or a direct current. The converter is adapted to convert the electrical power output from the electrical energy source into the electrical power input for the electrolyzer, wherein the electrical energy source may be a power station in an island operation mode or an electrical network in a network operation mode. For this, the converter may comprise an inverter which is adapted to provide a direct current for the electrolyzer.

This provides the advantage that a sampling rate of collecting raw data for determining the condition of the electrolyzer is increased by using the converter log data from the converter. The higher sampling rate of the converter log data allows a higher data density of the raw data which provides an improved condition monitoring of the electrolyzer.

In addition, the high sampling rate of the electrical measurements provides a denser analysis of the condition of the stacks and/or an electrical system of the electrolyzer. Operators of the electrolysis system including the electrolyzer can thus plan on-site maintenance in advance and more efficiently based on the actual condition of the electrolysis system. This reduces repair costs. This enables preventive maintenance, anticipating unexpected failures and mitigating the costs associated with them.

The proposed method also includes embodiments by which additional advantages are obtained.

In one embodiment, the condition is determined by means of a frequency spectrum analysis of at least the converter log data. In other words, the determining of the condition of the electrolyzer may involve a frequency spectrum analysis. The condition comprising the wear and/or the abrasion of the electrolyzer and/or of a component of the electrolyzer may be determined in a frequency domain of the converter log data. This has the advantage that the condition of the electrolyzer and/or the converter can be analyzed in more detail, allowing better prediction of maintenance.

In one embodiment, the converter log data further comprises electrolyzer sensor data and/or isolation monitoring data of the electrolysis system. In other words, the electrolyzer sensor data may comprise quality data on an electrolysis input, such as water, and an electrolysis product, such as oxygen and/or hydrogen. The electrolyzer sensor data may further comprise electrical and/or temperature measurement data, particularly of a stack of the electrolyzer. The insulation monitoring data may comprise insulation resistance measurement data and/or partial discharge measurement data of a component of the electrolysis system, in particular of the converter and/or of the electrolyzer. This has the advantage that the state or condition of the electrolyzer can be monitored and analyzed in more detail.

In one embodiment, the converter log data refer to a periodic time stamp and/or to an identical operating point and/or to an identical transition from a first operating point to a second operating point of the electrolysis system, particularly of the converter and/or of the electrolyzer. In other words, the periodic time stamp may be a data point that is sampled in a repeating or cyclic time interval which may be one day, one hour or a minute, for example. An identical operating point may refer to a same operating level of the electrolyzer of converting the electrical power input into the energy carrier at different points of time. The transition from the first operating point of the electrolyzer to the second operating point may refer to an identical or similar operation phase of the electrolyzer, such as ramping-up or ramping-down the electrolyzer.

Additionally, the converter log data may further be referred to the electrolyzer sensor data and/or to the isolation monitoring data by means of the time stamp and/or the identical operating point and/or the identical transition from the first operating point to the second operating point.

This has the advantage that the state or condition of the electrolyzer may be monitored under same operating conditions in shorter time intervals which gives thus more information about the electrolysis system and provides a more accurate long term and lifetime analysis, in particular a more accurate analysis of aging effects of the electrolyzer.

The invention further relates to a computer-program comprising instructions which, when the program is executed by a computer or a controller, particularly a converter controller and/or an electrolyzer controller and/or an electrolysis system controller, cause the computer or the controller to carry out the steps of said method. The computer or the controller may comprise means to execute said method, particularly means to control an operating point of an electrolyzer and/or of the converter. Particularly, the controller may comprise means to control a controlled switching operation of the converter for converting the electrical power output from the electrical energy source into the electrical energy input which is received by the electrolyzer from the converter. The computer or the controller may comprise means to read the converter log data from a buffer data storage of the converter, particularly from the converter controller and/or the electrolyzer controller and/or the electrolysis system controller.

The invention further relates to a computer readable storage medium having stored thereon said computer program. In other words, the computer readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer readable storage medium may be a RAM or a ROM, wherein particularly a flash memory is used. The computer readable storage medium may also be a data communication network which allows downloading a program code, such as the Internet for example, or further systems.

The invention further relates to a computer or a controller, particularly a converter controller and/or an electrolyzer controller and/or an electrolysis system controller, comprising said computer-readable storage medium and optionally means to execute said method. The computer may be a personal computer (PC) and/or a mobile device. The controller may be programmable logic controller (PLC). The computer or the controller may comprise at least one processor and said computer readable storage medium, wherein the computer readable storage medium comprises said computer program which, when executed by the at least one processor, cause the computer or the controller to perform the method as described above. In other words, the at least one processor may be a microprocessor and/or a microcontroller and/or a FPGA (Field Programmable Gate Array and/or a DSP (Digital Signal Processor). The computer or the controller may further comprise means to execute said method as described above, particularly means to control an operating point of an electrolyzer and/or of a converter. Particularly, the controller may comprise means to control a controlled switching operation of the converter for converting the electrical power output from an electrical energy source into an electrical power input which is received by the electrolyzer from the converter. The computer or the controller may comprise means to read the converter log data from a buffer data storage of the converter, particularly from the converter controller and/or the electrolyzer controller and/or the electrolysis system controller.

The invention further relates to a converter for an electrolysis system comprising said controller.

The invention further relates to an electrolysis system comprising said controller and/or said converter.

The invention further relates to an electrical power system comprising said electrolysis system. The electrical power system may be a network of electrical components deployed to supply, transfer, and use electric power. In other words, the electrical power system may comprise an entirety of all technical equipment required for generation, transmission and distribution of electrical energy within a control zone of a distribution area where electrical energy is provided from a producer to a consumer.

The invention also relates to realizations comprising a combination of the features of several of the described embodiments.

### Brief description of the drawings

The present disclosure will be more readily appreciated by reference to the following detailed description when being considered in connection with the accompanying drawings in which:
- Figure 1: shows a schematic electrolysis system whose condition is monitored based on converter log data from a converter of the electrolysis system;
- Figure 2: shows a schematic first communication infrastructure for reading the converter log data for a local evaluation;
- Figure 3: shows a schematic second communication infrastructure for reading the converter log data in connection with a supervisory control and data acquisition system (SCADA system); and
- Figure 4: shows a schematic flow chart of the method for determining a condition of the electrolyzer based on the converter log data.

In the following, the invention will be explained in more detail with reference to the accompanying figure. In the Figure, like elements are denoted by identical reference numerals and repeated description thereof may be omitted in order to avoid redundancies.

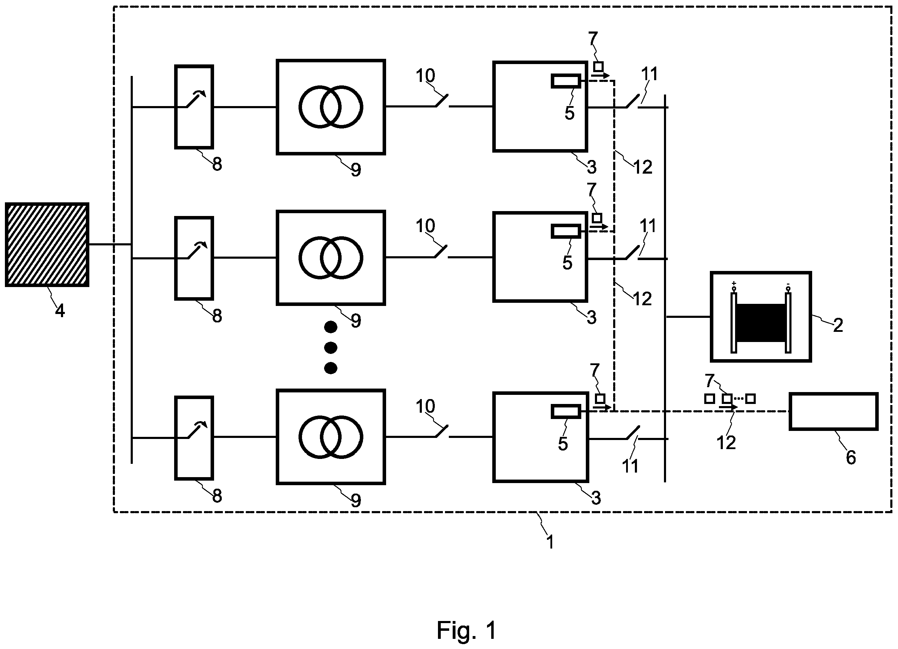

Figure 1 shows a schematic view of an electrolysis system 1 comprising an electrolyzer 2 which converts an electrical power input into an energy carrier, such as hydrogen. The electrical power input for the electrolyzer 2 is provided by at least one converter 3, which receives an electrical power output from an electrical energy source 4 optionally via the transformer 9, for example. The electrical energy source 4 may be an electrical power station in an island operation mode or an electrical network in a network operation mode. The converter 3 converts the electrical power output provided by the electrical energy source 4 into the electrical power input for the electrolyzer 2. The electrical power output may be an alternating current or a direct current, whereas the electrical power input is a direct current. Particularly, the converter 3 comprises an inverter for providing a direct current as the electrical power input to the electrolyzer 2. The electrolysis system 1 further comprises a first 8, a second 10 and/or a third switch 11 for disconnecting the converter 3 and/or the electrolyzer 2.

The converter 3 comprises a converter controller 5 for controlling a conversion process of converting the electrical power output from the electrical energy source 4 into the electrical power input for the electrolyzer 2. Thereby, converter log data 7 related to electrical measurements of the converter 3 are created and stored in a buffer data storage of the converter 3, particularly of the converter controller 5. For example, the converter log data 7 may comprise at least a voltage and/or a current of the electrical power output and/or of the electrical power input and/or a temperature of the converter 3, particularly of a converter component of the converter 3.

A particular advantage of the converter log data 7 is that it is sampled at a higher sampling rate than electrical measurement data of other components of the electrolysis system 1. Thus, the converter log data 7 has got a higher density of measurement data than electrolyzer sensor data of the electrolyzer 2. The higher sampling rate of the converter log data 7 provided by the converter controller 5 allows thus a more detailed and thorough determination and analysis of a condition of a component of the electrolysis system 1, in particular of the electrolyzer 2 and/or of the converter 3.

The condition of the electrolysis system 1 may be determined by means of identifying a trend in the converter log data 7. For this, the converter log data 7 may be related to a periodic time stamp and/or to an identical operating point and/or to an identical transition from a first operating point to a second operating point of the converter 3 and/or of the electrolyzer 2.

Electrolyzer sensor data and/or isolation monitoring data may further be added to the converter log data 7. The electrolyzer sensor data may comprise quality data on an electrolysis input of the electrolyzer 2 and/or quality data of an electrolysis product of the electrolyzer 2, in particular the energy carrier. For example, the quality data on the electrolysis input may be water quality data, such as a purity, and the quality data on the electrolysis product may be hydrogen and/or oxygen quality data, such as a purity and/or a pressure. The isolation measurement data may be derived from an isolation measurement of a component of the electrolysis system 1, particularly the converter 3 and/or the electrolyzer 2. Further, the electrolyzer sensor data and/or isolation monitoring data may be related to the converter log data 7 by at least a time stamp and/or the identical operating point and/or the identical or similar transition from the first operating point to the second operating point of the converter 3 and/or of the electrolyzer 2. This allows a more detailed determination of the condition of the electrolysis system 1.

Those converter log data 7 may be from a buffer data storage of the converter controller 5 which may only store those data for a limited amount of time. Therefore, those converter log data 7 may be further transferred via a communication infrastructure 12 to the electrolyzer controller 6 from where the converter data 7 may be stored locally, particularly together with the electrolyzer sensor data and/or the isolation monitoring data of the electrolyzer 2.

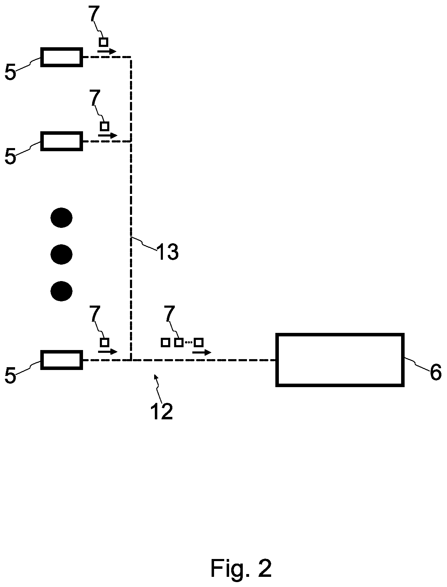

Figure 2 shows a first example of a schematic communication infrastructure 12 for reading the converter log data 7 from the converter controller 5, particularly for a local condition monitoring of the electrolyzer 2. The communication infrastructure 12 comprises a data connection 13 which couples the converter controller 5, particularly a buffer data storage of the converter controller 5, to the electrolysis controller 6. The data connection 13 may be wired or wireless. The converter log data 7 is transferred from the converter controller 5, particularly from the buffer data storage, to the electrolysis controller 6 for a local storage via the data connection 13 as only a limited amount of converter log data 7 can be stored in the converter controller 5. The electrolysis controller 6 may further add electrolyzer sensor data and/or isolation monitoring data of the electrolyzer 2. The converter log data is stored locally in a data storage of the electrolyzer controller 6 or in an external computing unit that may be connected to the electrolyzer 6 via a communication interface. Those data may be read out locally via the communication interface or via a network connection for determining the condition of the converter 3 and/or of the electrolyzer 2.

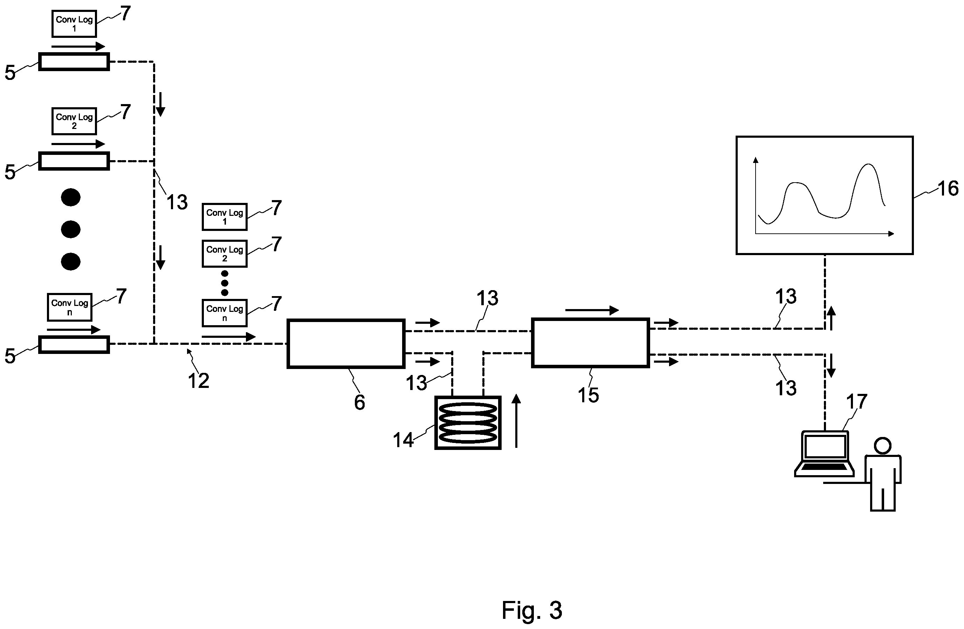

Figure 3 shows a second example of a schematic communication infrastructure 12 which is coupled to a supervisory control and data acquisition system (SCADA system). The converter log data 7 from the converter controller 5, particularly from the buffer data storage of the converter controller 5, is transmitted via the communication infrastructure 12 comprising the wired or wireless data connection 13 to the electrolysis controller 6 to be stored locally in a data storage 14. Here, the converter log data 7 may be stored in the data storage 14 together with electrolyzer sensor data and/or isolation monitoring data. In contrast to Figure 2, a server 15 reads the converter log data 7 directly from the electrolyzer controller 6 and/or from the local data storage 14 via the data connection 13. The server 15 may be a SCADA server, which accesses the data storage 14 and/or is communicatively coupled with the electrolyzer controller 6 and/or the converter controller 5 via the data connection 13. For this, the electrolyze controller 6 and/or the data storage 14 may comprise a network interface for being communicatively coupled to the server 15.

In case the electrolysis system 1 comprises a plurality of converters 3 and/or electrolyzes 2, a mean value of the converter log data 7 of the respective converter 3 may be used for determining the condition of the converter 3 and/or of the electrolyzer 2.

Additionally or alternatively, a maximum or minimum value of the converter log data 7 of the plurality of converters 7 may be used for determining the condition of the converter 3 and/or of the electrolyzer 2. For example, if converter log data 7 of a first converter may deviate above a deviation threshold value from a mean value of the converter log data 7 of the plurality of converters 3, it may be determined that the first converter and/or the electrolyzer 2 coupled to the first converter may require maintenance.

The determining of the condition of the electrolysis system 1 may be performed by the server 15 by using automated monitoring means 16 and/or a remote computing unit 17, which receives the converter log data 7 from the server 15 via the data connection 13.

The automated monitoring means 16 may comprise at least one of the following condition monitoring functions based on the converter log data 7:
- a long term trend analysis;
- a life-time monitoring, particularly an aging monitoring of the electrolyzer 2 or of a stack of the electrolyzer 2;
- a customer and/or a transmission system operator (TSO) requirement monitoring;
- a plant level evaluation of the electrolysis system 1;
- an artificial intelligence based plant optimization and/or a defect recognition, wherein the artificial intelligence is trained on the converter log data 7 for detecting a defect and/or an inefficiency;
- a preventive maintenance;
- an optimized maintenance planning; and/or
- an automatic report generation.

The local monitoring means 17 may provide at least one of the following condition monitoring functions based on the converter log data 7:
- a root cause evaluation (RCA), particularly a pre-fault and/or a post-fault analysis;
- a power quality analysis of the electrical energy source 4;
- a grid integration analysis;
- a grid code compliance analysis;
- a power supply analysis of the electrical energy source 4;
- an aging monitoring of the electrolyzer 2, particularly of a stack of the electrolyzer 2.

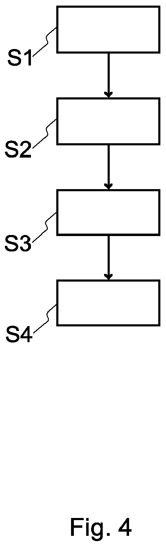

Figure 4 shows a schematic flow chart of an example of the method for determining a condition of the electrolyzer based on the converter log data 7.

In a first step S1, the converter log data 7 is read out from the converter controller 5, particularly from the buffer data storage of the converter controller 5 and/or from the data storage 14 electrolyzer controller 6 and/or from the server 15.

In a second step S2, the converter log data 7 is referred or linked to a to a periodic time stamp and/or to an identical operating point and/or to an identical or similar transition from a first operating point to a second operating point of the electrolysis system 1, particularly of the converter 3 and/or of the electrolyzer 2. The first and second operating point of the electrolyzer 2 may be between zero and a maximum conversion level of the electrolyzer 2 of converting the electrical power input into the energy carrier.

A periodic time stamp means taking a data point in a repeating or cyclic time interval which may be one day, one hour or a minute, for example. An identical operating point may refer to a same operating level of the electrolyzer 2 of converting the electrical power input into the energy carrier at different points of time. The transition from the first operating point of the electrolyzer to the second operating point may refer to an identical or similar operation phase of the electrolyzer, such as ramping-up or ramping-down the electrolyzer 2 at different points of time.

Additionally, the converter log data 7 may further be referred to electrolyzer sensor data and/or isolation monitoring data of the electrolysis system 1, particularly isolation monitoring data of the converter 3 and/or of the electrolyzer 2.

In a third step S3, a trend of the converter log data 7 is identified or determined based on the periodic time stamp and/or the identical operating point and/or the identical transition from the first operating point to the second operating point of the electrolysis system 1, particularly of the converter 3 and/or of the electrolyzer 2.

Additionally, the trend of the converter log data 7 is identified in relation to the electrolyzer sensor data and/or the isolation monitoring data.

Additionally, the identifying of the trend in the converter log data 7 further comprises a frequency spectrum analysis.

In a fourth step S4, the condition, particularly the wear and/or the abrasion, of the converter 3 and/or of the electrolyzer 2, particularly of a component of the electrolyzer 2, is determined based on the trend. The component of the electrolyzer 2 may be a stack, for example.

The advantage of using the converter log data 7 for determining the condition of the electrolysis system 1 is thus that the fast and high sampling rate converter log data 7 from the buffer data storage of the converter 3 is used for the condition monitoring of the electrolyzer 2, particularly of a stack of the electrolyzer 2.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. Method for monitoring a condition of an electrolyzer (2) of an electrolysis system (1) comprising the electrolyzer (2) and a converter (3) which converts an electrical power output from an electrical energy source (4) into an electrical energy input for the electrolyzer (2) and provides the electrical power input to the electrolyzer (2), wherein the electrolyzer (2)converts the electrical power input into an energy carrier,
**characterized in that**
converter log data (7) of the converter (3) is used to determine the condition.

2. Method according to claim 1, **characterized in that** the condition is determined by means of a frequency spectrum analysis of at least the converter log data (7).

3. Method according to one of the preceding claims, **characterized in that** the converter log data (7) further comprises electrolyzer sensor data and/or isolation monitoring data of the electrolysis system (1).

4. Method according to one of the preceding claims, **characterized in that** the converter log data (7) refer to a periodic time stamp and/or to an identical operating point and/or to an identical transition from a first operating point to a second operating point of the electrolysis system (1), particularly of the converter (3) and/or of the electrolyzer (2).

5. Computer program comprising instructions which, when the program is executed by a computer or a controller (5, 6), particularly a converter controller (5) and/or an electrolyzer controller (6) and/or an electrolysis system controller, cause the computer or the controller (5, 6) to carry out the steps of the method according to one of the claims 1 to 4.

6. Computer-readable storage medium having stored thereon the computer program according to claim 5.

7. Computer or a controller (5, 6), particularly a converter controller (5) and/or an electrolyzer controller (6) and/or an electrolysis system controller (5, 6), comprising a computer-readable storage medium having stored thereon the computer program according to claim 5 and optionally means to execute the method according to one of the claims 1 to 4.

8. Converter (3) for an electrolysis system (1) comprising the controller (5, 6) of claim 7.

9. Electrolysis system (1) comprising the controller (5, 6) of claim 7 and/or the converter (3) of claim 8.

10. Electrical power system comprising the electrolysis system (1) of claim 9.
